(19) Europäisches Patentamt / European Patent Office / Office européen des brevets

(11) EP 3 053 936 A1

(12) **EUROPEAN PATENT APPLICATION**

(43) Date of publication: **10.08.2016 Bulletin 2016/32**

(51) Int Cl.: ***C08F 210/16*** *(2006.01)* ***C08F 4/651*** *(2006.01)*

(21) Application number: **15154077.0**

(22) Date of filing: **06.02.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Borealis AG**
**1220 Vienna (AT)**

(72) Inventors:
- **Jayaratne, Kumudini**
**00930 Helsinki (FI)**
- **Albrecht, Andreas**
**4030 Linz (AT)**
- **Jeremic, Ljiljana**
**4040 Linz (AT)**

(74) Representative: **Salminen, Hannu**
**Borealis Polymers Oy**
**P.O. Box 330**
**06101 Porvoo (FI)**

(54) **Process for producing copolymers of ethylene with alpha-olefins**

(57) The present invention is a process for copolymerising ethylene with at least one alpha-olefin having from 4 to 10 carbon atoms in the presence of an olefin polymerisation catalyst comprising a solid catalyst component and an activator, for producing a copolymer of ethylene and the at least one alpha-olefin comonomer having from 4 to 10 carbon atoms. The solid catalyst component comprises magnesium, titanium, halogen and an internal donor. The internal donor is selected from bi-(oxygen containing ring) compounds of formula (I)

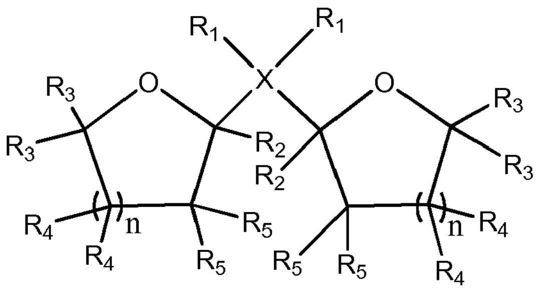

(I)

wherein X is C or Si; $R_1$ can be the same or different and can be hydrogen, a linear or branched $C_1$ to $C_8$-alkyl group, or a $C_3$-$C_8$-alkylene group; and $R_2$ to $R_5$ are the same or different and can be hydrogen, a linear or branched $C_1$ to $C_8$-alkyl, or a $C_3$-$C_8$-alkylene group; and whereby two or more of $R_1$ to $R_5$ can form a ring; n is the same for both oxygen-containing rings and can be 0, 1 or 2; whereby the two oxygen-containing rings can be individually saturated or unsaturated, or an isomer mixture therefrom. The process comprises the steps of: (a) producing a solution comprising a magnesium compound, a titanium compound and the internal donor; (b) combining the solution of step (a) with an alkane or cycloalkane having from 5 to 20 carbon atoms; (c) maintaining the mixture (b) at a temperature of from -20 °C to +50 °C; (d) heating the mixture (b) to a temperature of from 70 to 110 °C to produce a solid component; (e) washing the solid component in at least one washing step to produce the solid catalyst component; (f) polymerising ethylene and the alpha-olefin comonomer having from 4 to 10 carbon atoms in the polymerisation reactor in the presence of the polymerisation catalyst; and (g) recovering the copolymer of ethylene and the alpha-olefin, wherein the copolymer has a comonomer distribution characterised by a Slope Value (SV) of at least 0.8 wherein the Slope Value (SV) is defined

EP 3 053 936 A1

as $SV = slope + \frac{(2+branch\ point\ length)^{1.2}}{5.3}$ wherein slope is obtained from GPC - IR measurements as defined in the application and the branch point length is CN-2 wherein CN is the number of carbon atoms in the comonomer molecule.

**FIGURE 2**

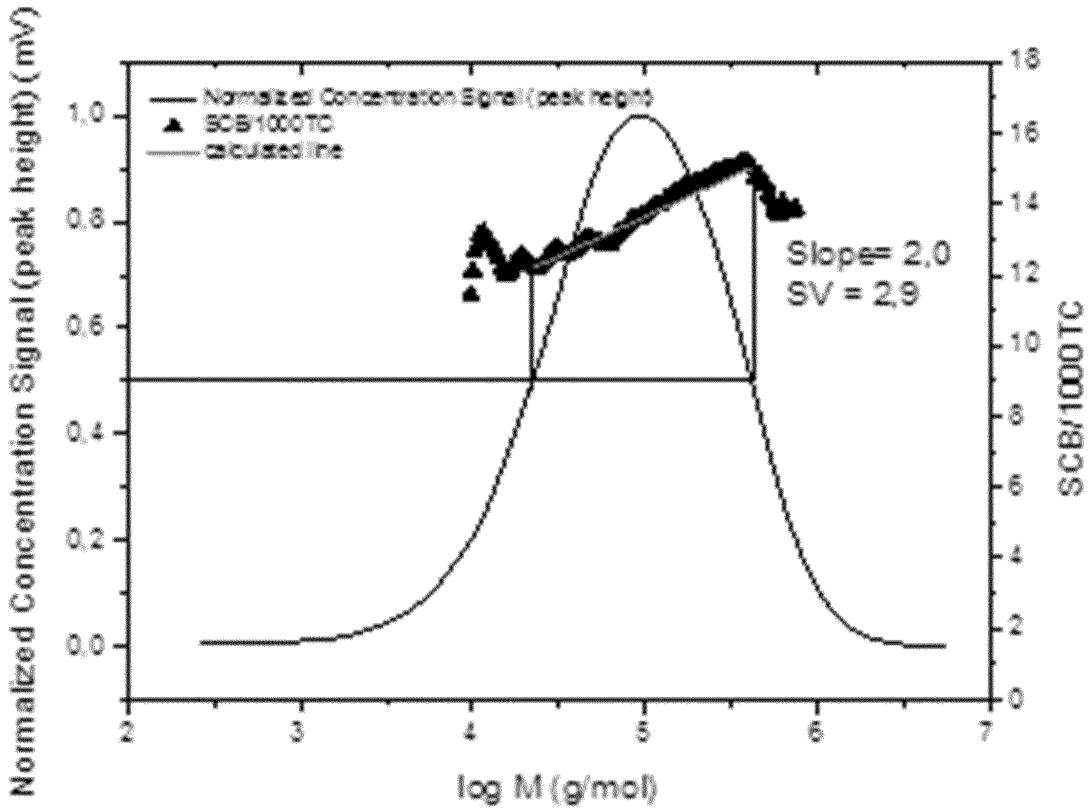

## Description

The present invention is aimed at producing copolymers of ethylene with higher alpha-olefins. More specifically, the present invention is aimed at producing copolymers of ethylene with higher alpha-olefins in the presence of a polymerisation catalyst comprising a specific donor. In particular, the invention is aimed at producing copolymers of ethylene with higher alpha-olefins where the comonomer content over the polymer chains is not influenced by the molecular weight of the polymer chains.

## Field of the Invention

WO-A-2008/153586 discloses a process where ethylene was polymerised in two steps in the presence of a magnesium-titanium type Ziegler-Natta catalyst in specific polymerisation conditions. The catalyst additionally contained an internal donor which could be, for instance, an ester or an ether. Tetrahydrofuran was given as a suitable example of a donor. The catalyst was used together with an aluminium alkyl activator. The resulting bimodal copolymers were reported to have a constant molecular weight over the composition distribution. The resins had a density of from 0.930 to 0.945 g/cc.

US-A-2014/0058053 discloses a process for polymerising olefins, especially propylene, in the presence of a polymerisation catalyst comprising an internal donor which is a specific heterocyclic organic compound. In the examples 2,2-di(2-tetrahydrofuryl)propane, 2,2-di(2-furyl)propane, 2,2'-dipyrrolylmethane, 2,2'-dipyridylamine, 2,2'-di(2-thiophenyl)propane and ethyl tetrahydrofuran-2-acetate were used as internal donors. The catalysts were used in the polymerisation of propylene and the polymers were reported to have high isotacticity.

WO-A-2013/142793 discloses a process for producing ethylene copolymers where the comonomer content was essentially constant over the molecular weight. The polymers were produced in the presence of a specific polymerisation catalyst comprising a nitrogen-containing compound. 2,6-dimethylpyridine was used in the examples as the nitrogen-containing compound.

US-B-7582712 discloses a process where ethylene was copolymerised in the presence of a catalyst having an internal donor which is a substituted furan derivative. 2,5-dimethylfuran was used in the examples as the internal donor.

EP-A-2746306 discloses a solid catalyst composition comprising an internal electron donor where the internal donor is a compound comprising two oxygen-containing cyclic compounds. The catalyst was prepared by precipitation method. The catalysts were used for ethylene copolymerisation and the copolymers were reported to have a higher molecular weight than those produced with a catalyst not containing the donor compound.

## Problem to Be Solved

In the copolymerisation of ethylene with higher alpha-olefins, such as alpha-olefins having from 4 to 10 carbon atoms, it is a common problem with most Ziegler-Natta polymerisation catalysts that they produce a copolymer where the comonomer is concentrated in the polymer chains having the lowest molecular weight. Such polymer chains having low molecular weight and high comonomer content dissolve easily from the main polymer. This is seen as a high content of extractable material in the polymer. Further, such low molecular weight comonomer-rich polymer is soft and sticky and makes the handling properties of the polymer poor. For instance, polymer particles containing such material tend to agglomerate and fuse during the polymerisation process, leading to process upsets.

## Summary of the Invention

The present invention provides a process for copolymerising ethylene with at least one alpha-olefin having from 4 to 10 carbon atoms in the presence of an olefin polymerisation catalyst comprising a solid catalyst component and an activator, for producing a copolymer of ethylene and the at least one alpha-olefin comonomer having from 4 to 10 carbon atoms, wherein said solid catalyst component comprises magnesium, titanium, halogen and an internal donor wherein said internal donor is selected from bi-(oxygen containing ring) compounds of formula (I)

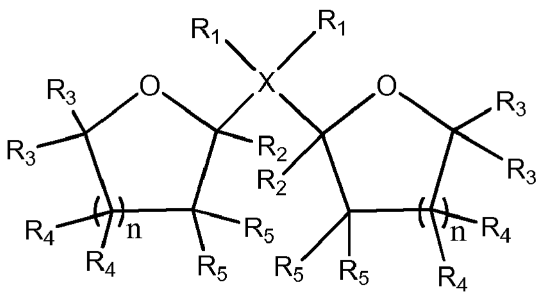

(I)

wherein X is C or Si; $R_1$ can be the same or different and can be hydrogen, a linear or branched $C_1$ to $C_8$-alkyl group, or a $C_3$-$C_8$-alkylene group; and $R_2$ to $R_5$ are the same or different and can be hydrogen, a linear or branched $C_1$ to $C_8$-alkyl, or a $C_3$-$C_8$-alkylene group; and whereby two or more of $R_1$ to $R_5$ can form a ring; n is the same for both oxygen-containing rings and can be 0, 1 or 2; whereby the two oxygen-containing rings can be individually saturated or unsaturated, or an isomer mixture therefrom, and wherein said process comprises the steps of: (a) producing a solution comprising a magnesium compound, a titanium compound and the internal donor; (b) combining the solution of step (a) with an alkane or cycloalkane having from 5 to 20 carbon atoms; (c) maintaining the mixture (b) at a temperature of from -20 °C to +50 °C; (d) heating the mixture (b) to a temperature of from 70 to 110 °C to produce a solid component; (e) washing the solid component in at least one washing step to produce the solid catalyst component; (f) transferring the solid catalyst component into a polymerisation reactor; (g) copolymerising ethylene and the alpha-olefin comonomer having from 4 to 10 carbon atoms in the polymerisation reactor in the presence of the solid catalyst component and the activator to produce a copolymer of ethylene and the alpha-olefin; and (h) recovering the copolymer of ethylene and the alpha-olefin, wherein the copolymer has a comonomer distribution characterised by a Slope Value (SV) of at least 0.8 wherein the Slope Value (SV) is defined as $SV = slope + \frac{(2+branch\ point\ length)^{1.2}}{5.3}$ wherein slope is obtained from GPC - IR measurements as defined in the application and the branch point length is CN-2 wherein CN is the number of carbon atoms in the comonomer molecule.

**Description of the Drawings**

FIGURE 1 is an illustrative drawing showing how the CTBI value can be determined from a Crystaf fractogram.

FIGURE 2 shows the comonomer content - MWD chart for Example 5.

FIGURE 3 shows the comonomer content - MWD chart for Comparative Example 1.

**Detailed Description**

In the subsequent text the terms "activator" and "cocatalyst" are used synonymously.

Catalyst

Solid catalyst component

The solid catalyst component used in copolymerisation of ethylene is a solid Ziegler-Natta catalyst component for ethylene polymerisation, which solid Ziegler-Natta catalyst component comprises magnesium, titanium, halogen and an internal electron donor. The internal donor is selected from bi-(oxygen containing ring) compounds of formula (I)

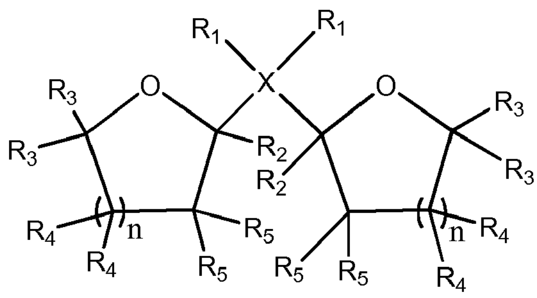

where X is C or Si,
$R_1$ can be the same or different and can be hydrogen, a linear or branched $C_1$ to $C_8$-alkyl group, or a $C_3$-$C_8$-alkylene group, and $R_2$ to $R_5$ are the same or different and can be hydrogen, a linear or branched $C_1$ to $C_8$-alkyl, or a $C_3$-$C_8$-alkylene group, whereby two or more of $R_1$ to $R_5$ can form a ring,
n is the same for both oxygen-containing rings and can be 0, 1 or 2,
whereby the two oxygen-containing rings can be individually saturated or unsaturated,
or an isomer mixture therefrom.

Preferably the solid catalyst component has

a) a Mg content (determined by ICP Analysis) in the range of 5.0 to 22.0 wt%, more preferably 6.0 to 20 wt%, even more preferably 6.5 to 18 wt%, and

b) a Ti content (determined by ICP Analysis) in the range of 1.0 to 15.0 wt%, more preferably 1.5 to 10.0 wt%, even more preferably 2.0 to 8.5 wt%

As used herein the terms "solid catalyst component" or "solid Ziegler Natta (ZN) catalyst component" are intended to cover a catalyst component formed from titanium, magnesium, halogen, optionally a compound of Group 13 or 14 of the Periodic Table (IUPAC) and an internal donor.

The magnesium compounds are selected from the group comprising, preferably consisting of magnesium dialkyls and alkyl magnesium alkoxides. It can further be selected from the group consisting of dialkyloxy magnesium, diaryloxy magnesium, alkyloxy magnesium halides, aryloxy magnesium halides, alkyl magnesium alkoxides, aryl magnesium alkoxides and alkyl magnesium aryloxides.

Most preferably the magnesium compound is the reaction product of a magnesium dialkyl $(R^6)_2Mg$ and an alcohol $R^7OH$.

The magnesium dialkyl compound has formula $(R^6)_2Mg$, wherein the two $R^6$ are the same or different and can be a linear or branched or cyclic $C_1$-$C_{20}$-alkyl or $C_5$-$C_{10}$-aryl group.

Suitably the $C_1$-$C_{20}$-alkyl group and the $C_5$-$C_{12}$-aryl group can be an alkyl, cycloalkyl, alkylcycloalkyl, cycloalkylalkyl, aryl, arylalkyl, or alkylaryl, wherein "alkyl" used as alone or as part of another option can be linear or branched and "aryl" is of 5-12 carbon ring atoms, suitably phenyl or naphthyl.

Preferably the two $R^6$ can be independently a linear or branched $C_2$-$C_{10}$-alkyl.

Typical magnesium alkyls are ethyl butyl magnesium, dibutyl magnesium, dipropyl magnesium, propyl butyl magnesium, dipentyl magnesium, butyl pentyl magnesium, butyl octyl magnesium and dioctyl magnesium. Most preferably, one $R^6$ is a butyl group and the other $R^6$ is an ethyl or octyl group, i.e. the dialkyl magnesium compound is butyl octyl magnesium or ethyl butyl magnesium.

The alcohol has the formula $R^7OH$ with $R^7$ being a linear or branched or cyclic $C_1$-$C_{20}$- alkyl group or $C_5$-$C_{10}$-aryl group.

Suitably the $C_1$-$C_{20}$-alkyl group and the $C_5$-$C_{12}$-aryl group can be an alkyl, cycloalkyl, alkylcycloalkyl, cycloalkylalkyl, aryl, arylalkyl, or alkylaryl, wherein "alkyl" used as alone or as part of another option can be linear or branched and "aryl" is of 5-12 carbon ring atoms, suitably phenyl or naphthyl.

Typical $C_1$-$C_5$ alcohols are methanol, ethanol, n-propanol, iso-propanol, n-butanol, iso-butanol, sec.-butanol, tert.-butanol, n-amyl alcohol, iso-amyl alcohol, sec. amyl alcohol, tert.-amyl alcohol, diethyl carbinol, sec. isoamyl alcohol, tert. butyl carbinol, cyclopentanol.

Typical $C_6$-$C_{10}$ alcohols are hexanol, 2-ethyl-1-butanol, 4-methyl-2-pentanol, 1-heptanol, 2-heptanol, 4-heptanol, 2,4-dimethyl-3-pentanol, 1-octanol, 2-octanol, 2-ethyl-1-hexanol, 1-nonanol, 5-nonanol, diisobutyl carbinol, 1-decanol and 2,7-dimethyl-2-octanol.

Typical $>C_{10}$ alcohols are n-1-undecanol, n-1-dodecanol, n-1-tridecanol, n-1-tetradecanol, n-1-pentadecanol, 1-hexadecanol, n-1-heptadecanol and n- 1 octadecanol.

The alcohols may be unsaturated, as long as they do not act as catalyst poisons. Preferable alcohols are those of formula $R^7OH$ in which $R^7$ is a linear or branched $C_2$-$C_{16}$ alkyl group, most preferably a linear or branched $C_4$-$C_{12}$ alkyl group, particularly 2-ethyl-1-hexanol.

The reaction product of the magnesium dialkyl $(R^6)_2Mg$ and an alcohol $R^7OH$ has the formula $Mg(OR^7)_{2-n}(R^6)_n$ (II).

In the formula (II) $R^6$ and $R^7$ are defined as described above and can be independently a $C_1$-$C_{20}$ alkyl group or a $C_5$-$C_{12}$-aryl group, the alkyl or aryl group may optionally be substituted with halogen.

Furthermore in formula (II) $0 \leq n < 2$.

Said magnesium compound of formula (II) may be commercially available or, preferably, can be prepared by reaction of a magnesium dialkyl compound of the formula $R^6Mg$, as described above with the alcohol $R^7OH$, as defined above.

The magnesium dialkyl/alcohol molar ratio is from 1:1 to 1:4, preferably from 1:1.5 to 1:3.5, more preferably from 1:1.7 to 1:2.0.

The reaction of the magnesium dialkyl and the alcohol may take place at any temperature but preferably takes place at a low temperature, e.g. 0-40°C, especially at room temperature.

The titanium compound is preferably a halogen-containing titanium compound of the formula $X_yTi(OR^8)_{4-y}$ (IV), wherein $R^8$ is a $C_{1-20}$ alkyl, preferably a $C_{2-10}$ and more preferably a $C_{2-8}$ alkyl group, X is halogen, preferably chlorine and y is 1, 2, 3 or 4, preferably 3 or 4 and more preferably 4.

Suitable titanium compounds include trialkoxy titanium monochlorides, dialkoxy titanium dichloride, alkoxy titanium trichloride and titanium tetrachloride. Preferably titanium tetrachloride is used.

The internal donor is selected from bi-(oxygen containing ring) compounds of formula (I) or isomer mixtures therefrom:

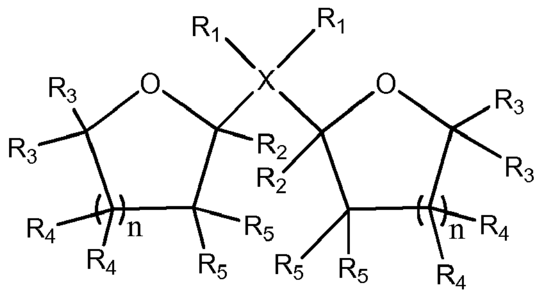

In the formula (I) X is C or Si,
$R_1$ can be the same or different and can be hydrogen, a linear or branched $C_1$ to $C_8$-alkyl group, or a $C_3$-$C_8$-alkylene group, and $R_2$ to $R_5$ are the same or different and can be hydrogen, a linear or branched $C_1$ to $C_8$-alkyl, or a $C_3$-$C_8$-alkylene group, whereby two or more of $R_1$ to $R_5$ can form a ring,
n is the same for both oxygen-containing rings and can be 0, 1 or 2,
whereby the two oxygen-containing rings can be individually saturated or unsaturated.

Examples for linear or branched $C_1$ to $C_8$-alkyl groups are methyl, ethyl, n-propyl, i-propyl, n-butyl, sec.-butyl, tert.-butyl, pentyls, hexyl, and the like.

Examples for $C_3$-$C_8$-alkylene groups are pentylene, butylenes and the like.

In the formula (I) X is preferably C.

Two or more of $R_1$ to $R_5$ can also form a ring. If one or more rings are formed by the residues $R_1$ to $R_5$, these are preferably formed by $R_3$ and $R_4$ and/or $R_4$ and $R_5$.

Preferably the residues $R_1$ to $R_5$ do not form rings.

The two $R_1$ are preferably the same and can be a linear $C_1$ to $C_4$-alkyl, more preferably methyl or ethyl and most preferably both $R_1$ are methyl.

$R_2$ to $R_5$ are preferably the same or different and can be H or a $C_1$ to $C_2$-alkyl, more preferably only up to four of the residues $R_2$ to $R_5$ are a methyl, the others are H and most preferably $R_2$ to $R_5$ are all H.

For both oxygen-containing rings n is the same and is 0, 1 or 2, preferably 1 or 2 and more preferably 1.

Furthermore both oxygen-containing rings are preferably saturated or unsaturated, more preferably both oxygen-containing rings are saturated.

Examples for saturated oxygen-containing rings are:

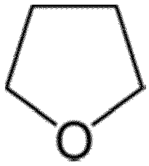 and 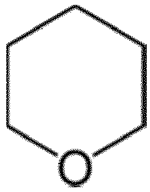

Examples for unsaturated oxygen-containing rings are:

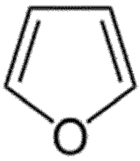 and 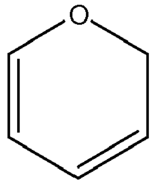 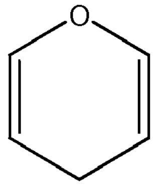 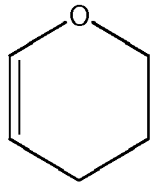

Examples of suitable internal donors are 2,2-di(2-tetrahydrofuryl)propane, 2,2-di(2-tetrahydropyranyl)propane, 2,2-di(2-(3,4-dihydro-2H-pyranyl))propane, 2,2-di-(2-pyranyl)propane, 2,2-di-(2-furan)-propane, as well as their analogous alkane compounds, like butane, hexane etc. An especially preferred donor compound is 2,2-di(2-tetrahydrofuryl)propane.

A solution (1) containing the magnesium compound of formula $Mg(OR^7)_{2-n}(R^6)_n$ (II), wherein $R^6$ and $R^7$ are defined as described above and $0 \leq n < 2$, is prepared first:
by contacting, in a hydrocarbon solvent (e.g. heptane), a compound of formula $Mg(R^6)_2$, wherein $R^6$ is defined as described above, e.g. each $R^6$ is independently methyl, ethyl, propyl, butyl, pentyl, hexyl, heptyl or octyl, e.g. di(n-butyl) magnesium, n-butyl sec-butyl magnesium, butyl ethyl magnesium or butyl octyl magnesium, preferably butyl octyl magnesium (BOMAG),
with an alcohol of formula $R^7OH$, wherein $R^7$ is defined as described above. Preferably $R^7$ is a linear or branched $C_2$-$C_{16}$ alkyl group, most preferably a linear or branched $C_4$-$C_{12}$ alkyl group, particularly 2-ethyl-1-hexanol.

The alcohols which are usable to transform the magnesium alkyl compound to a magnesium compound soluble in a hydrocarbon solvent, are known in the art or can be readily determined by a skilled person. Said contact is effected in a temperature between 0 and 100°C, preferably at 10 to 40°C, e.g. at 20 to 30°C. The reaction can be completed by heating the system at 50 to 100°C for 10 to 100 min. Preferably the alcohol is added to the Mg solution. The molar ratio of Mg dialkyl to $R^7OH$ ($Mg:R^7OH$) is preferably from 1:1 to 1:4, more preferably 1:1 to 1:3.5, e.g. 1:1.5 to 1:3.5, especially 1:1.8 to 1:3.1.

To the prepared reaction mixture (1), i.e. Mg-compound-containing solution (1), is then added slowly the internal donor.

Ad Solutions of the Starting Compounds:

The term "solution" is understood herein broadly to include solutions prepared from (a) one or more of the support forming compounds in liquid form (liquid at the room temperature or a melt prepared at a higher temperature) and/or (b) from an organic solvent(s).

The solutions are suitably formed using an organic solvent that dissolves the compounds.

Preferred solvents include inert hydrocarbons, e.g. linear or branched aliphatic, alicyclic or aromatic $C_{5-20}$ hydrocarbons, preferably $C_{6-12}$ hydrocarbons, wherein the ring systems may contain hydrocarbon, e.g. $C_{1-6}$ alkyl substituents, such as cyclohexane, hexane, heptane, octane or toluene, or any mixtures thereof. E.g. linear or branched alkanes, e.g. hexane, heptane or octane, may be used.

The titanium compound employed for the preparation of the solid catalyst component is also soluble in the liquid hydrocarbon and is, in general, a compound in which the titanium has its maximum valency, that is to say valence 4. The titanium compound employed may be a compound of the general formula $Ti(OR^8)_{4-y}X_y$ in which $R^8$ and X are defined as described above, and y an integral or fractional number ranging from 0 to 4. Among these compounds, titanium tetrachloride or titanium tetra-isopropoxide can be employed.

Preferably titanium tetrachloride is used.

According to the method of the invention the catalyst is prepared by (a) producing a solution comprising the magnesium compound, the titanium compound and the internal donor; (b) combining the solution of step (a) with an alkane or cycloalkane having from 5 to 20 carbon atoms; (c) maintaining the mixture (b) at a temperature of from -20

°C to +50 °C; (d) heating the mixture (b) to a temperature of from 70 to 110 °C to produce a solid component; (e) washing the solid component in at least one washing step to produce the solid catalyst component and (f) recovering the solid catalyst component.

The magnesium compound, the titanium compound and the internal donor are as described above.

The magnesium compound, the titanium compound and the internal donor are mixed to form a solution. The solution may in addition comprise a solvent which is capable to dissolve the components. Such solvent, if used, must be inert towards the magnesium compound, the titanium compound and the internal donor. Toluene is an example of suitable solvents.

One or more emulsifying agents or emulsion stabilisers may be added to the solution. Such compounds are typically surface active agents, also called surfactants. The chemical nature of such agents depends on the components of the mixture. Preferably such agents have a hydrocarbon structure and bear at least one group selected from -OH, -SH, $-NH_2$, -COOH, $COONH_2$ or any reactive derivative of these groups.

Also viscosity improvers or other similar compounds may be added. Such viscosity improvers are typically soluble polymers of olefins, such as soluble copolymers of mixtures two or more of alpha-olefins having from 2 to 20 carbon atoms, such as ethylene, propylene, 1-butene, 1-hexene, 1-octene and 1-decene, or homopolymers of alpha-olefins having from 6 to 20 carbon atoms.

The solution is formed and maintained at a temperature within the range of from -20 to +50 °C, preferably from -10 to +40 °C, such as from -5 to +35 °C. At a too high temperature a premature solidification of the catalyst may take place.

The alkane or cycloalkane having from 5 to 20 carbon atoms is preferably an alkane or a cycloalkane having from 5 to 15 carbon atoms, more preferably from 5 to 12 carbon atoms. The alkane may be linear or branched and the cycloalkane may have (alkyl) substituents in the cyclic structure. Especially preferred are alkanes having from 5 to 12 carbon atoms, such as pentanes, hexanes, heptanes and octanes. Also mixtures of the above-mentioned hydrocarbons may be used.

After combining the solution with the alkane or cycloalkane the mixture is agitated at a temperature within the range of from -20 °C to +50 °C, preferably from -10 to +40 °C, more preferably from 0 to +35 °C, such as from +10 to +30 °C. The agitation is continued until a stable system is obtained, for instance for a period of from 15 to 180 minutes, such as from 20 to 120 minutes.

The catalyst is then solidified by heating the mixture under agitation to a temperature of from 70 to 110 °C, preferably from 75 to 105 °C and more preferably from 80 to 100 °C.

The solid catalyst component is then washed in one or more washing steps. The wash liquid typically comprises a hydrocarbon having from 5 to 12 carbon atoms or a mixture of such hydrocarbons, such as an alkane having from 5 to 12 carbon atoms or a mixture of two or more such alkanes.

Preferably an aluminium compound is present in at least one washing step. Especially preferably, the aluminium compound is an aluminium compound of the formula $Al(alkyl)_xX_{3-x}$(III), wherein alkyl is an alkyl group of 1 to 12 C-atoms, preferably 1 to 8 C-atoms, more preferably 1 to 6 C-atoms, X is halogen, preferably chlorine and $1 \leq x \leq 3$, preferably x is 2 or 3, more preferably 2. The alkyl group can be linear, branched or cyclic, or a mixture of such groups.

Suitable aluminium compounds are dialkyl aluminium chlorides or alkyl aluminium dichlorides or trialkyl aluminium compounds, for example dimethyl aluminium chloride, diethyl aluminium chloride, diisobutyl aluminium chloride, ethyl aluminium dichloride, methyl aluminium dichloride and triethylaluminium or mixtures therefrom.

Preferably used as aluminium compound are dialkyl aluminium chlorides, more preferably diethyl aluminium chloride (DEAC).

Ad Wash Solution:

As the wash solution, e.g. any organic solvent or mixtures thereof known in the art can be used. Preferable solvents include hydrocarbons as defined above, e.g. pentane, hexane or heptane, particularly heptane.

Generally, in the final solid catalyst component particles, the molar ratio of Mg:Ti can be e.g. between 10:1 to 1:10, preferably less than 6:1, such as between less than 6:1 and 1:1.

When aluminium is present in the solid catalyst component the molar ratio of Ti:Al can be e.g. from 20:1 to 1:2, e.g. 5:1 to 1:1. The ratios can be determined in a manner known in the art.

The so prepared supported solid catalyst component is washed in one to 4 washing steps and subsequently recovered.

Preferably the solid catalyst components have an average particles size in the range of 2 to 200 μm, more preferably from 5 to 150 μm and most preferably from 10 to 50 μm.

The final solid catalyst component, i.e. the ZN solid catalyst component, obtained according to the above described method is combined with an activator. Suitable activators are optionally halogenated aluminium alkyl cocatalysts of formula (V) $(C_1-C_4\text{-alkyl})_p-Al-X_{3-p}$, wherein X is chlorine, bromine, iodine or fluorine and p is 1, 2 or 3.

The $C_1-C_4$-alkyl groups can be linear or branched or cyclic, or a mixture of such groups.

X is preferably chlorine or bromine, most preferably X is chlorine.

Suitable activators are for example trimethyl aluminium (TMA), triethyl aluminium (TEA) dimethyl aluminium chloride (DMAC), diethyl aluminium chloride (DEAC), diisobutyl aluminium chloride (DIBAC), ethyl aluminium dichloride (EADC), methyl aluminium dichloride (MADC).

A preferred activator according to the invention is triethylaluminium.

The amount in which the activator is used depends on the specific catalyst and the activator. Typically triethylaluminium is used in such amount that the molar ratio of aluminium to the transition metal, like Al/Ti, is from 1 to 1000, preferably from 3 to 100 and in particular from about 5 to about 30 mol/mol.

Copolymerisation of ethylene with alpha-olefin

The catalyst is used for copolymerising ethylene with at least one alpha-olefin having from 4 to 10 carbon atoms. The polymer produced thereby has the comonomer evenly distributed over the molecular weight range of the polymer. This is characterised in that the polymer has a Slope Value (SV) of at least 0.8, preferably at least 1.9. It has been found that when an aluminium alkyl halide, preferably an aluminium alkyl chloride, has been added into at least one washing step it is possible to reach a Slope Value (SV) of at least 2.4, or even at least 2.9 while the catalyst still has good activity in the polymerisation.

The copolymerisation process may be conducted in slurry, gas phase or in solution. Especially preferably the copolymerisation is conducted as a particle form process, i.e., in slurry or in gas phase.

In slurry polymerisation the polymer particles are suspended in a diluent. The polymer particles contain the catalyst, typically as fragmented and dispersed within the polymer particle. In a preferred embodiment the slurry polymerisation is conducted in a loop reactor. Loop reactors are generally known in the art and examples are given, for instance, in US-A-4582816, US-A-3405109, US-A-3324093, EP-A-479186 and US-A-5391654.

In gas phase polymerisation the polymer particles are suspended in gas. This may be done by providing an upwards rising gas stream in which the particles are suspended thus forming a fluidised bed. Examples of such polymerisation processes are given in US-A-4933149, WO-A-2005/087361, US-A-4578879, WO-A-2007/025640, US-A-4543399, EP-A-699213, WO-A-94/25495, EP-A-696293, WO-A-00/29452, US-A-4621952, EP-A-188125, EP-A-250169 and EP-A-579426.

The at least one alpha-olefin comonomer is an alpha-olefin having from 4 to 10 carbon atoms. The alpha-olefin comonomer is preferably selected from the group consisting of 1-butene, 1-hexene, 4-methyl-1-pentene and 1-octene. Especially preferably one alpha-olefin comonomer is present in the copolymerisation process.

Preferably the content of the units derived from the at least one alpha-olefin in the copolymer is from 0.5 to 5 % by mole and the content of the units derived from ethylene is from 95 to 99.5 % by mole. More preferably, the content of the units derived from the at least one alpha-olefin in the copolymer is from 1 to 4 % by mole and the content of the units derived from ethylene is from 96 to 99 % by mole.

Benefits of the invention

The process of the present invention produces a copolymer where the comonomer is incorporated evenly to the polymer chain, meaning that the comonomer is not concentrated to the polymer chains having the lowest molecular weight. Instead, any molecular weight fraction of the polymer has approximately equal content of comonomer units. This improves the mechanical strength of the polymer and reduces the amount of soluble polymer produced during the polymerisation.

## Description of methods

Melt flow rate

Melt flow rate (MFR) was determined according to ISO 1133 at 190 °C. The load under which the measurement is conducted is given as a subscript. Thus, the MFR under the load of 2.16 kg is denoted as $MFR_2$. The melt flow rate $MFR_{21}$ is correspondingly determined at 190 °C under a load of 21.6 kg.

Density

Density of the polymer was measured according to ISO 1183-1:2004 Method A on compression moulded specimen prepared according to EN ISO 1872-2 (Feb 2007) and is given in $kg/m^3$.

Activity of the catalyst

The activity of the catalyst (in kg/(g·h)) was determined as the amount of polymer produced in the process (in kg/h) divided by the amount of catalyst fed into the process (in g/h) per unit of the residence time in the reactor (h).

Molecular weight averages, molecular weight distribution (Mn, Mw, Mz, MWD)

Molecular weight averages (Mz, Mw and Mn), Molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) according to ISO 16014-1:2003, ISO 16014-2:2003, ISO 16014-4:2003 and ASTM D 6474-12 using the following formulas:

$$M_n = \frac{\sum_{i=1}^{N} A_i}{\sum_{i=1}^{N} (A_i / M_i)} \quad (1)$$

$$M_w = \frac{\sum_{i=1}^{N} (A_i x\ M_i)}{\sum_{i=1}^{N} A_i} \quad (2)$$

$$M_z = \frac{\sum_{i=1}^{N} (A_i\ x\ M_i^2)}{\sum_{i=1}^{N} (A_i \times M_i)} \quad (3)$$

For a constant elution volume interval $\Delta V_i$, where $A_i$ and $M_i$ are the chromatographic peak slice area and polyolefin molecular weight (MW), respectively associated with the elution volume, $V_i$, where N is equal to the number of data points obtained from the chromatogram between the integration limits.

A high temperature GPC instrument, equipped with a multiple band infrared detector model IR5 (PolymerChar, Valencia, Spain), equipped with 3 x Agilent-PLgel Olexis and 1x Agilent-PLgel Olexis Guard columns was used. As the solvent and mobile phase 1,2,4-trichlorobenzene (TCB) stabilized with 250 mg/L 2,6-Di tert butyl-4-methyl-phenol) was used. The chromatographic system was operated at 160 °C at a constant flow rate of 1 mL/min. 200 μL of sample solution was injected per analysis. Data collection was performed by using PolymerChar GPC-one software.

The column set was calibrated using universal calibration (according to ISO 16014-2:2003) with 19 narrow MWD polystyrene (PS) standards in the range of 0.5 kg/mol to 11 500 kg/mol. The PS standards were dissolved at room temperature over several hours. The conversion of the polystyrene peak molecular weight to polyethylene molecular weights is accomplished by using the Mark Houwink equation and the following Mark Houwink constants:

$K_{PS} = 19 \times 10^{-3}$ mL/g, $\alpha_{PS} = 0.655$

$K_{PE} = 39 \times 10^{-3}$ mL/g, $\alpha_{PE} = 0.725$

A third order polynomial fit was used to fit the calibration data.

All samples were prepared in the concentration range of 0.5 -1 mg/ml and dissolved at 160 °C for 3 hours for PE under continuous gentle shaking.

Determination of the SCB/1000TC along the molecular weight (logM)

The IR 5 detector provides different detector signals, which were designated as concentration signal (broad spectral band covering the spectral region from 2800 $cm^{-1}$ to 3000 $cm^{-1}$), methyl ($CH_3$) (narrow band filter centred at 2959 $cm^{-1}$) and methylene ($CH_2$) (centred at 2928 $cm^{-1}$) signal. The ratio of the methyl to the methylene detector signals is correlating to the total amount of methyl ($CH_3$) per 1000 carbon atoms ($CH_3$/1000TC) (A. Ortin, B. Monrabal, J. Montesinos, P. del Hierro, Macromol. Symp. 2009, 282, 65-70). The determination of the $CH_3$/1000TC using an IR5 detector can be performed by calibrating the $CH_3/CH_2$ ratio versus the nominal $CH_3$/1000TC content. A linear fit was used for this purpose.

The branching degree of all calibration set samples was determined by $^{13}C$ melt-state NMR as described in K. Klimke, M. Parkinson, C. Piel, W. Kaminsky, H. W. Spiess, M. Wilhelm, Macromol. Chem. and Phys., 2006, 207, 382; M. Parkinson, K. Klimke, H. W. Spiess, M. Wilhelm, Macromol. Chem. and Phys., 2007, 208, 2128. The calibration set used for this method includes 17 different short chain branched polyethylenes, both single site catalysed and fractions of Ziegler Natta catalysed polyethylene-co-butene, polyethylene-co-hexene and polyethylene-co-octene covering an overall branching level up to 80 methyl groups per 1000 carbons (CH3/1000C).

The short chain branching was determined as methyl branching per 1000 total carbons and might be corrected for up to 2 methyl chain end groups per polymer chain.

Determination of the Slope Value (SV)

After plotting the concentration signal and the SCB/1000TC content along the log M axis the determination of the Slope Value is straight forward and can be obtained in 4 steps:

1. The log M value at half height of the peak maximum were determined as $logM_1$ and $logM_2$ ($log\ M_1 < logM_2$).
2. The corresponded SCB/1000TC content at $logM_1$ ($SCB/1000TC_1$) and $logM_2$ ($SCB/1000TC_2$) were determined
3. The slope can then be calculated by using the following formula:

$$slope = \frac{\frac{SCB}{1000TC_2} - \frac{SCB}{1000TC_1}}{logM_2 - logM_1}$$

4. The slope Value (SV) is obtained in the following way:

$$SV = slope + \frac{(2 + branch\ point\ length)^{1.2}}{5.3}$$

and the branch point length is CN-2, wherein CN is the number of carbon atoms in the comonomer, e.g., 2 for 1-butene, 4 for 1-hexene and 6 for 1-octene.

CRYSTAF method

The chemical composition distribution was determined by analytical Crystallisation Analysis Fractionation (CRYSTAF) as described in B. Monrabal; Crystallization analysis fractionation: A new technique for the analysis of branching distribution in polyolefins; Journal of Applied Polymer Science 1994, 52 (4), 491-499 and Soares, J.B.P., Fractionation, In: Encyclopedia Of Polymer Science and Technology, John Wiley & Sons, New York, pp. 75-131, Vol. 10, 2001. The separation of the polymer in CRYSTAF is according to their crystallinity in solution. The CRYSTAF profiles were generated using a CRYSTAF-TREF 200+ instrument manufactured by PolymerChar S.A. (Valencia, Spain).

The polymer sample was dissolved in 1,2,4-trichlorobenzene (TCB, stabilized with 250 mg/L 2,6-Di tert butyl-4-methyl-phenol) in one of the vessels at a concentration of 0.05 w/v% at 160 °C for 90 min. The sample solution was then rapidly cooled to 95 °C and held at 95 °C for 45 min for stabilization purpose. The polymer sample was crystallized and precipitated in the vessel by a slow reduction of the temperature to 30 °C under a constant cooling rate (0.1 °C/min). The concentration of polymers remaining in solution was determined by taking out 36 samples during the whole crystallisation process in constant time intervals using nitrogen overpressure. The concentration of the polymer being eluted was measured with an infrared detector (measuring the C-H absorption at 3.5 micrometre wavelength) and recorded together with the temperature in the vessel oven as a function of time. The detector response was plotted as a function of the temperature. The initial polymer concentration is assigned the 100% value and a pure solvent (TCB) is defined as 0% (cumulative concentration profile). The resulting curve was interpolated and differentiated to obtain the CRYSTAF profile (dw/dT). The soluble fraction is obtained by extrapolation of the cumulative curve to 30 °C.

Definition of High crystalline fraction (HCF) and Low crystalline fraction (LCF):

The high crystalline fraction (HCF) is the amount in wt.-% of the polymer fraction with a crystallisation temperature higher than 80°C, which mainly contains the homo-polyethylene chains or chains with a very low branching content.

The low crystalline fraction (LCF) is than the amount in wt.-% of the polymer fraction with a crystallisation temperature between 30 and 80°C.

Calculation of the CTB (Copolymer Temperature Breadth) and Copolymer Temperature Breadth Index (CTBI)

The Calculation of the CTB and the CTBI index can be performed by using the following procedure:

In the first step the HCF is neglected and only the LCF + SF have to be considered for this calculation. The peak area < 80°C (LCF+SF) is normalized to 100 % and a cumulative curve of the SF and LCF along the crystallization temperature is obtained,

The temperatures $T_1$ and $T_2$, at which 25% and respectively 75% of the combined fraction (LCF + SF) crystallize, were determined (see Figure 1).

From these temperatures CTB (Copolymer Temperature Breadth) can be calculated in the following way:

$$CTB = T_1 - T_2$$

The CTBI can be calculated using the following formula:

$$CTBI_{80} = \frac{CTB}{e^{0,2x}}$$

with x is the comonomer content in mol.-% as determined by $^{13}C$ melt-state NMR as described in K. Klimke, M. Parkinson, C. Piel, W. Kaminsky, H. W. Spiess, M. Wilhelm, Macromol. Chem. and Phys., 2006, 207, 382; M. Parkinson, K. Klimke, H. W. Spiess, M. Wilhelm, Macromol. Chem. and Phys., 2007, 208, 2128.

## Examples

### Complex preparation 1

A mixture of 50.0 mL 2-ethylhexanol (from Sigma-Aldrich) and 25.0 mL butoxypropanol (from Sigma-Aldrich) was placed under nitrogen atmosphere in a 300 mL glass reactor with a mechanical stirrer. To this alcohol mixture 220.0 mL of BOMAG [$Mg(Bu)_{1,5}(Oct)_{0.5}$ (a 20 weight% solution in toluene)], from Chemtura, was added within 80 minutes with stirring (molar ratio 2-ethylhexanol / butoxypropanol = 1.9, and molar ratio alcohol / Mg = 2.1). During the addition reactor contents were maintained below 25 °C. After the addition of BOMAG, mixing of the reaction mixture at 25 °C was continued for another 60 minutes. The temperature of the reaction mixture was then raised to 60°C within 14 minutes and held at that temperature for 60 minutes with stirring, at which time the reaction was complete. The reaction mixture was cooled to room temperature to obtain 240g of the Mg-alkoxide complex as a colourless liquid.

### Catalyst Preparation 1

Under an atmosphere of nitrogen 19.5 mL of $TiCl_4$ was placed in a 300 mL glass reactor equipped with a mechanical stirrer. Mixing speed was set to 300 rpm and contents were cooled to 0°C. 27.2 g of magnesium alkoxide solution prepared as described above in Complex Preparation 1, and 1 mL of 2,2-di(2-tetrahydrofuryl)propane were pre-mixed for fifteen minutes at room temperature, and this mixture was added to $TiCl_4$ within 41 minutes keeping the reaction temperature at 0°C. 4 mL of Viscoplex 1-254 (a 50% solution in toluene) and 2 mL of Necadd 447 (2 mg in 1 mL of toluene) was added, stirred for five min. and 24 mL of heptane was added. After stirring at 0°C for 5 minutes, the cold bath was removed and the reaction mixture was stirred at ambient temperature for 30 minutes. Temperature of the reaction mixture was raised to 90 °C within 21 minutes and the temperature was maintained at 90°C for another 30 minutes. Stirring was stopped, the reaction mixture was allowed to settle at 90 °C, the mother - liquor was siphoned and the resulting solid catalyst was washed as follows,

Wash 1

100 mL of toluene at 90 °C with 0.15 mL diethylaluminimumchloride (DEAC) was added, stirred at 90 °C for 30 minutes, the reaction mixture was allowed to settle for 20 min and the upper liquid layer was siphoned.

Wash 2

60 mL of heptane at 90 °C was added, stirred at 90°C for 20 minutes, the reaction mixture was allowed to settle for 10 minutes and the upper liquid layer was siphoned.

Wash 3

60 mL of heptane at 90 °C was added, stirred at 90°C for 10 minutes, the temperature was reduced to room temperature while stirring, reaction mixture was allowed to settle for 10 minutes and the upper liquid layer was siphoned.

Wash 4

60 mL of pentane was added at room temperature, stirred for 10 minutes, the reaction mixture was allowed to settle for 10 min and the upper liquid layer was siphoned.
Finally the temperature was increased to 70°C and the solid catalyst was dried at this temperature for about 1 hour under a flow of nitrogen to yield 4.9 g of the catalyst as an air sensitive solid.

**Catalyst Preparation 2**

The procedure of Catalyst Preparation 1 was repeated except that the addition time of the Mg-complex was 34 minutes and that the washing steps Wash 2 to Wash 4 were conducted as below:

Wash 2

60 mL of heptane at 90 °C with 0.15 mL of DEAC was added, stirred at 90°C for 20 minutes, the reaction mixture was allowed to settle for 10 minutes and the upper liquid layer was siphoned.

Wash 3

60 mL of heptane at 90 °C was added, stirred at 90°C for 20 minutes, reaction mixture was allowed to settle for 10 minutes and the upper liquid layer was siphoned and subsequently the reactor temperature was reduced to room temperature.

Wash 4

60 mL of pentane was added at room temperature, stirred for 10 minutes, the reaction mixture was allowed to settle for 10 minutes and the upper liquid layer was siphoned.
Finally the temperature was increased to 70°C within 10 minutes and the solid catalyst was dried at this temperature for 20 minutes under a flow of nitrogen to yield 4.7 g of the catalyst as an air sensitive solid.

**Catalyst Preparation 3**

The procedure of Catalyst Preparation 1 was repeated except that the addition time of the Mg-complex was 30 minutes, and the amount of Viscoplex was 3 ml. Further, the washing steps were conducted as disclosed below:

Wash 1

100 mL of toluene at 90 °C was added, stirred at 90 °C for 30 minutes, the reaction mixture was allowed to settle for 20 min. and the upper liquid layer was siphoned.

Wash 2

60 mL of heptane at 90 °C was added, stirred at 90°C for 20 minutes, the reaction mixture was allowed to settle for 10 minutes and the upper liquid layer was siphoned.

Wash 3

60 mL of heptane at 90 °C was added, stirred at 90°C for 10 minutes, the temperature was reduced to room

temperature while stirring, reaction mixture was allowed to settle for 10 minutes and the upper liquid layer was siphoned.

Wash 4

60 mL of pentane was added at room temperature, stirred for 10 minutes, the reaction mixture was allowed to settle for 10 minutes and the upper liquid layer was siphoned.

Finally the temperature was increased to 70°C within 19 min. and the solid catalyst was dried at this temperature for about 20 minutes under a flow of nitrogen to yield 4.4 g of the catalyst as an air sensitive solid.

**Catalyst Preparation 4**

The procedure of Catalyst Preparation 1 was repeated except that the addition time of the Mg-complex was 46 minutes. The washing steps 1 to 3 were conducted as in Catalyst Preparation 3. The washing step 4 was conducted as below:

Wash 4

60 mL of pentane was added at room temperature, stirred for 10 minutes, the reaction mixture was allowed to settle for 10 minutes and the upper liquid layer was siphoned.

Finally the temperature was increased to 70°C within 13 minutes and the solid catalyst was dried at this temperature for about 8 minutes under a flow of nitrogen to yield 4.2 g of the catalyst as an air sensitive solid.

**Catalyst Preparation 5**

The procedure of Catalyst Preparation 1 was repeated except that the amount of 2,2-di(2-tetrahydrofuryl)propane was 0.5 mL and addition time of the Mg-complex was 38 minutes. The washing steps 1 to 3 were conducted as in Catalyst Preparation 3. The washing step 4 was conducted as below:

Wash 4

60 mL of pentane was added at room temperature, stirred for 10 minutes, the reaction mixture was allowed to settle for 10 minutes and the upper liquid layer was siphoned.

Finally the temperature was increased to 70°C within 13 minutes and the solid catalyst was dried at this temperature for about 10 minutes under a flow of nitrogen to yield 4.1 g of the catalyst as an air sensitive solid.

**Catalyst Preparation 6**

The procedure of Catalyst Preparation 1 was repeated except that the amount of 2,2-di(2-tetrahydrofuryl)propane was 0.5 mL and the amount of the Viscoplex solution was 3 mL. The washing steps 1 to 3 were conducted as in Catalyst Preparation 3. The washing step 4 was conducted as below:

Wash 4

60 mL of pentane was added at room temperature, stirred for 10 minutes, the reaction mixture was allowed to settle for 10 minutes and the upper liquid layer was siphoned.

Finally the temperature was increased to 70°C within 15 minutes and the solid catalyst was dried at this temperature for about 10 minutes under a flow of nitrogen to yield 4.0 g of the catalyst as an air sensitive solid.

**Comparative Catalyst Preparation 1**

Under an atmosphere of nitrogen 19.5 mL of TiCl4 was placed in a 300 mL glass reactor equipped with a mechanical stirrer. Mixing speed was set to 300 rpm and contents were cooled to 0°C. 28.1 g of magnesium alkoxide solution prepared as described above was added to $TiCl_4$ within 43 minutes keeping the reaction temperature at 0°C. 5 mL of Viscoplex 1-254 (a 50% solution in toluene) and 2 mL of Necadd 447 (2 mg in 1 mL of toluene) was added, stirred for five minutes and 9 mL of heptane was added. The cold bath was removed and the reaction mixture was stirred at ambient temperature for 30 minutes. Temperature of the reaction mixture was raised to 90°C within 22 minutes and the temperature was maintained at 90°C for another 30 minutes. Stirring was stopped, the reaction mixture was allowed to settle at 90°C, the mother - liquor was siphoned and the resulting solid catalyst was washed as follows,

Wash 1

100 mL of toluene at 90°C was added, stirred at 90 °C for 30 minutes, the reaction mixture was allowed to settle for 20 minutes and the upper liquid layer was siphoned.

Wash 2

60 mL of heptane at 90°C was added, stirred at 90°C for 10 minutes, hot bath was taken off, the reaction mixture was stirred at ambient temperature for 10 minutes, allowed to settle for 20 minutes and the upper liquid layer was siphoned.

Wash 3

60 mL of pentane was added at room temperature, stirred for 10 minutes, the reaction mixture was allowed to settle for 10 minutes and the upper liquid layer was siphoned.

Finally the temperature was increased to 70°C and the solid catalyst was dried at this temperature for about 17 minutes under a flow of nitrogen to yield 3.3 g of the catalyst as an air sensitive solid.

**Complex Preparation 2**

35.7 mL of 2-ethylhexanol (from Sigma-Aldrich) was placed in a 300 mL glass reactor equipped with a mechanical stirrer. To this alcohol 137.0 mL of butyloctylmagnesium (BOMAG, Mg(Bu)1,5(Oct)0.5, a 20 % solution in heptane) from Chemtura, was added within 77 minutes with stirring (molar ratio of alcohol / Mg = 1.9). During the addition reactor contents were maintained below 25 °C. After the addition of BOMAG, mixing of the reaction mixture at 25 °C was continued for another 60 minutes. The temperature of the reaction mixture was then raised to 60 °C within 17 minutes and held at that temperature for 60 minutes with stirring, at which time the reaction was complete. The reaction mixture was cooled to room temperature to obtain 122 g of the Mg-alkoxide complex as a colourless liquid.

**Comparative Catalyst Preparation 2**

Support Material

5.9 mL of EADC (25% solution in toluene) was placed in a glass reactor equipped with a mechanical stirrer at 25°C. Mixing speed was set to 170 rpm. 20 mL of magnesium alkoxide solution prepared as described above in Complex Preparation 2 and 0.23 mL of tetrahydrofurane were pre-mixed for ten minutes at room temperature, and this mixture was slowly added to EADC within 14 minutes keeping the reaction temperature around 24°C. The temperature of the reaction mixture was raised to 60°C within 18 minutes and the temperature was maintained at 60°C for another 30 minutes. Stirring was stopped, the reaction mixture was allowed to settle at 60 °C for 15 minutes and the mother - liquid was siphoned off. Resulting support was cooled to room temperature and was washed as follows,

Wash 1

20 mL of heptane was added, stirred for 10 minutes, the support was allowed to settle for 10 minutes and the upper liquid layer was siphoned.

Wash 2

20 mL of heptane was added, stirred for 10 minutes, the support was allowed to settle for 20 hours and the upper liquid layer was siphoned to yield 22 g of the support material.

This support material was used in the following titanation step.

Titanation of the Support Material

22 g of the support material synthesized above was placed in a glass reactor equipped with a mechanical stirrer at 25°C. Mixing speed was set to 170 rpm and 0.76 mL of $TiCl_4$ was added to the support material. The temperature of the reaction mixture was raised to 60°C within 18 minutes and the temperature was maintained at 60°C for another 30 minutes. Stirring was stopped, the reaction mixture was allowed to settle at 60 °C for 35 minutes and the mother-liquid was siphoned off. Resulting solid was cooled to room temperature and washed as follows,

Wash 3

20 mL of heptane was added, stirred for 15 minutes, the solid material was allowed to settle for 30 minutes and the upper liquid layer was siphoned.

Wash 4

20 mL of pentane was added, stirred for 15 minutes, the sold material was allowed to settle for 30 minutes and the upper liquid layer was siphoned.
Finally the temperature was increased to 60°C and the solid catalyst was dried at this temperature for 2 hours under a flow of nitrogen to yield 1.94 g of the catalyst as an air sensitive solid.

**Comparative Example 1**

The solid catalyst component produced according to Comparative catalyst Preparation 1 was used in the copolymerisation of ethylene and 1-butene in a 3 L stainless steel semi-batch reactor as follows: 1.25 L of propane and the desired amount of hydrogen were added into the reactor and the contents of the reactor were stirred and heated to the run temperature (85°C). The triethylaluminium co-catalyst (TEA) and the solid catalyst component were then introduced along with 100 mL of propane so that the molar ratio of TEA/Ti was 15 mol/mol, together with the desired amount of 1-butene co-monomer and ethylene. Ethylene was fed on demand to maintain the specified pressure corresponding to ethylene concentration of 5 mol-% in the liquid phase for the specific length of the polymerization run (60 minutes). The amount of 1 -butene was such that the molar ratio of 1-butene to ethylene was 750 mol/kmol at the beginning of the polymerisation. The reactor was maintained and controlled at the desired run temperature (85°C) throughout the polymerization. Upon completion, the ethylene flow was stopped and the reactor pressure slowly vented off. The reactor was opened and the polymer product was collected and dried in a fume hood overnight.
The results of the polymerisation runs are shown in Table 1. The polymer properties are shown in Table 2. The molecular weight - comonomer content chart of the polymer of Comparative Example 1 is shown in Figure 3.

**Comparative Example 2**

The procedure of Comparative Example 1 was repeated except that the solid catalyst component and the cocatalyst were combined before they were charged into the reactor and they were held in contact at 23 °C for 45 minutes.
The results of the polymerisation runs are shown in Table 1. The polymer properties are shown in Table 2.

**Examples 1 to 6**

The procedure of Comparative Example 2 was repeated except that the solid catalyst components prepared according to Catalyst Preparation 1 to 6, respectively, were used.
Furthermore, in Example 2 the polymerisation time was 51 minutes instead of 60 minutes.
The results of the polymerisation runs are shown in Table 1. The polymer properties are shown in Table 2. The molecular weight - comonomer content chart of the polymer of Example 5 is shown in Figure 2.

**Comparative Example 3**

The procedure of Comparative Example 1 was repeated except that the solid catalyst component prepared according to the procedure of Comparative Catalyst Preparation 2 was used. Furthermore, the molar ratio of TEA/Ti was 20 mol/mol. The conditions and the results of the polymerisation runs are shown in Table 1. The polymer properties are shown in Table 2.

*Table 1: Polymerisation data and basic polymer properties for 1-butene copolymerisation conducted in the presence of catalysts of Examples 1 to* 6 *and Comparative Examples 1 to 3.*

| Example | Catalyst Example | $H_2/C_2$ Mol/kmol | Activity Kg PE/g cat/h | $MFR_{21}$ Dg/min | Mw, Kg/mol | $C_4$ in polymer Wt-% |
|---|---|---|---|---|---|---|
| CE1 | C1[1)] | 45 | 6.3 | 25 | 131 | 6.4 |
| CE2 | C1 | 45 | 7.7 | 33 | 128 | 7 |
| E1 | E1 | 65 | 7 | 6 | 160 | 4.5 |

(continued)

| Example | Catalyst Example | $H_2/C_2$ Mol/kmol | Activity Kg PE/g cat/h | $MFR_{21}$ Dg/min | Mw, Kg/mol | $C_4$ in polymer Wt-% |
|---|---|---|---|---|---|---|
| E2 | E2[2)] | 65 | 11.3 | 7 | 156 | 4.7 |
| E3 | E3 | 65 | 2 | 7 | 158 | 4.2 |
| E4 | E4 | 65 | 1.7 | 7 | 156 | 4.4 |
| E5 | E5 | 65 | 7.4 | 8 | 152 | 5.1 |
| E6 | E6 | 65 | 9.1 | 8 | 149 | 4.8 |
| CE3 | C2[1)] | 50 | 12 | 40 | 107 | 6.8 |
| [1)] No precontact between TEA and solid catalyst component<br>[2)] polymerisation time 51 minutes | | | | | | |

*Table 2: Polymer data for 1-butene copolymers of Examples 1 to 6 and Comparative Examples 1 to 3*

| Example | Catalyst Example | slope | Slope Value | CTB | CTBI |
|---|---|---|---|---|---|
| CE1 | C1 | -11.2 | -10.2 | 34.0 | 17.6 |
| CE2 | C1 | -13.2 | -12.2 | 37.3 | 18.1 |
| E1 | E1 | 2.1 | 3.1 | 21.5 | 13.6 |
| E2 | E2 | 2.3 | 3.3 | 21.4 | 13.2 |
| E3 | E3 | 1.4 | 2.4 | 21.6 | 14 |
| E4 | E4 | 1.6 | 2.6 | 21.4 | 13.6 |
| E5 | E5 | 2.0 | 2.9 | 23.6 | 14.0 |
| E6 | E6 | 1.1 | 2.1 | 22.4 | 13.7 |
| CE3 | C2 | -4.7 | -3.7 | NA | NA |
| NA: Not analysed | | | | | |

## Claims

**1.** A process for copolymerising ethylene with at least one alpha-olefin having from 4 to 10 carbon atoms in the presence of an olefin polymerisation catalyst comprising a solid catalyst component and an activator, for producing a copolymer of ethylene and the at least one alpha-olefin comonomer having from 4 to 10 carbon atoms, wherein said solid catalyst component comprises magnesium, titanium, halogen and an internal donor wherein said internal donor is selected from bi-(oxygen containing ring) compounds of formula (I)

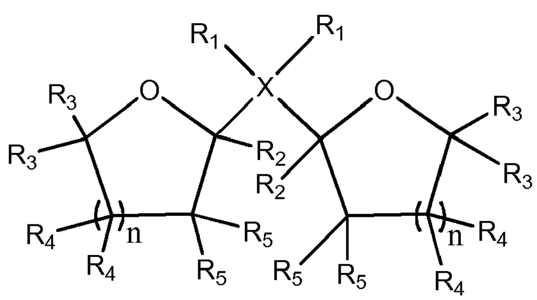

(I)

wherein X is C or Si; $R_1$ can be the same or different and can be hydrogen, a linear or branched $C_1$ to $C_8$-alkyl group, or a $C_3$-$C_8$-alkylene group; and $R_2$ to $R_5$ are the same or different and can be hydrogen, a linear or branched

$C_1$ to $C_8$-alkyl, or a $C_3$-$C_8$-alkylene group; and whereby two or more of $R_1$ to $R_5$ can form a ring; n is the same for both oxygen-containing rings and can be 0, 1 or 2; whereby the two oxygen-containing rings can be individually saturated or unsaturated, or an isomer mixture therefrom, and wherein said process comprises the steps of: (a) producing a solution comprising a magnesium compound, a titanium compound and the internal donor; (b) combining the solution of step (a) with an alkane or cycloalkane having from 5 to 20 carbon atoms; (c) maintaining the mixture (b) at a temperature of from -20 °C to +50 °C; (d) heating the mixture (b) to a temperature of from 70 to 110 °C to produce a solid component; (e) washing the solid component in at least one washing step to produce the solid catalyst component; (f) transferring the solid catalyst component into a polymerisation reactor; (g) copolymerising ethylene and the alpha-olefin comonomer having from 4 to 10 carbon atoms in the polymerisation reactor in the presence of the solid catalyst component and the activator to produce a copolymer of ethylene and the alpha-olefin; and (h) recovering the copolymer of ethylene and the alpha-olefin, wherein the copolymer has a comonomer distribution **characterised by** a Slope Value (SV) of at least 0.8 wherein the Slope Value (SV) is defined as $SV = slope + \frac{(2+branch\ point\ length)^{1.2}}{5.3}$ wherein slope is obtained from GPC - IR measurements as defined in the application and the branch point length is CN-2 wherein CN is the number of carbon atoms in the comonomer molecule.

**2.** The process according to claim 1 wherein X is C.

**3.** The process according to claim 1 or claim 2 wherein n is 1.

**4.** The process according to any one of the preceding claims wherein the electron donor is selected from the group consisting of 2,2-di(2-tetrahydrofuryl)propane, 2,2-di(2-tetrahydropyranyl)propane, 2,2-di(2-(3,4-dihydro-2H-pyranyl))propane, 2,2-di-(2-pyranyl)propane, 2,2-di-(2-furan)-propane, 2,2-di(2-tetrahydrofuryl)butane, 2,2-di(2-tetrahydropyranyl)butane, 2,2-di(2-(3,4-dihydro-2H-pyranyl))butane, 2,2-di-(2-pyranyl)butane, and 2,2-di-(2-furan)-butane.

**5.** The process according to any one of the preceding claims wherein ethylene and one alpha-olefin comonomer are copolymerised.

**6.** The process according claim 5 wherein the alpha-olefin comonomer is selected from the group consisting of 1-butene, 1-hexene, 4-methyl-1-pentene and 1-octene.

**7.** The process according to any one of the preceding claims wherein the content of the units derived from the at least one alpha-olefin in the copolymer is from 0.5 to 5 % by mole and the content of the units derived from ethylene is from 95 to 99.5 % by mole.

**8.** The process according to claim 7 wherein the content of the units derived from the at least one alpha-olefin in the copolymer is from 1 to 4 % by mole and the content of the units derived from ethylene is from 96 to 99 % by mole.

**9.** The process according to claim any one of the preceding claims wherein the Slope Value is at least 1.7.

**10.** The process according to any one of the preceding claims wherein an aluminiumalkylhalide is introduced into at least one washing step.

**11.** The process according to claim 10 wherein the aluminiumalkylhalide is an aluminiumalkylchloride.

**12.** The process according to claim 11 wherein the aluminiumalkylchloride is selected from the group consisting of diethylaluminiumchloride, ethylaluminium sesquichloride, dimethylaluminiumchloride and methylaluminium sesquichloride.

**13.** The process according to any one of claims 10 to 12 wherein the Slope Value (SV) is at least 3.0.

**FIGURE 1**

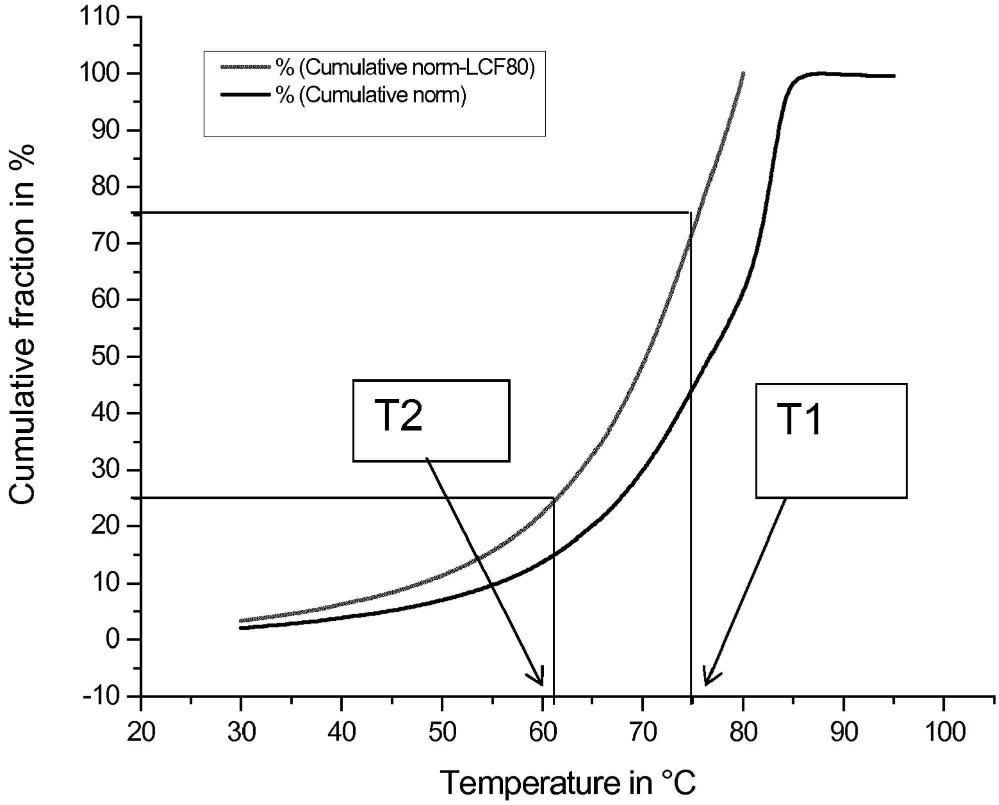
% (Cumulative norm-LCF80)
% (Cumulative norm)
Cumulative fraction in %
Temperature in °C
T2
T1
110
100
90
80
70
60
50
40
30
20
10
0
-10
20
30
40
50
60
70
80
90
100

FIGURE 2

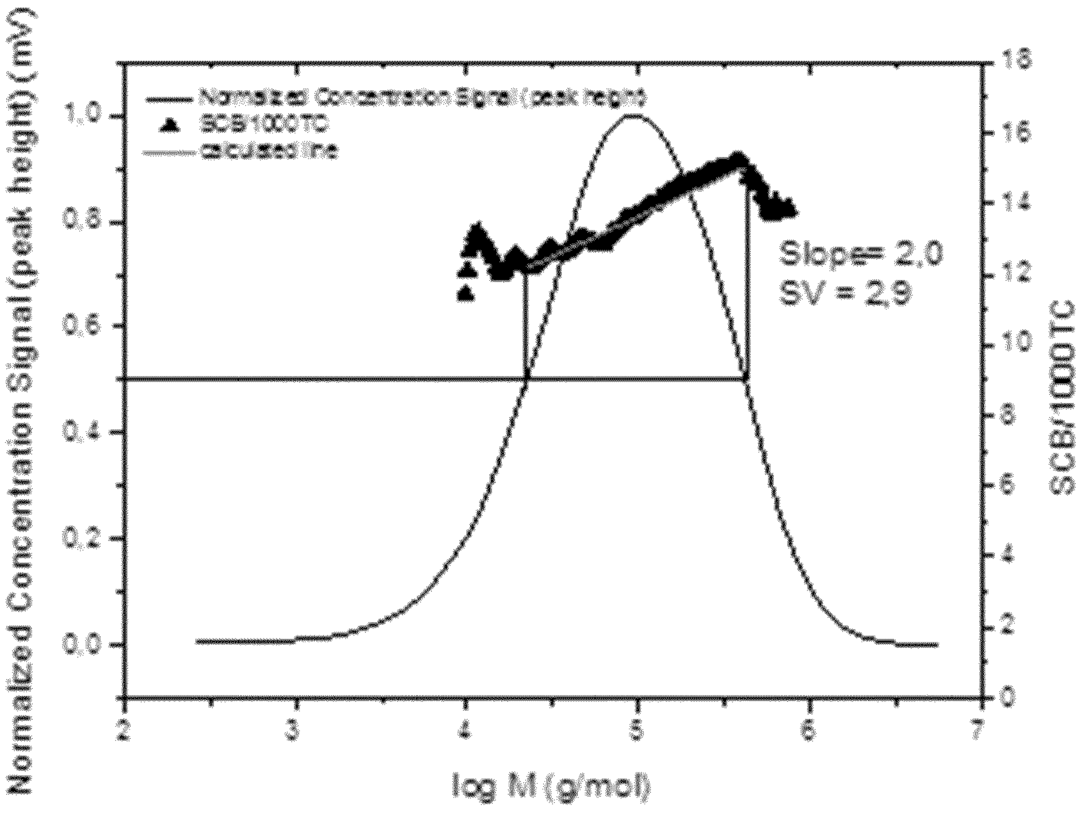
Normalized Concentration Signal (peak height)
SCB/1000TC
calculated line
Slope= 2,0
SV = 2,9
Normalized Concentration Signal (peak height) (mV)
1,0
0,8
0,6
0,4
0,2
0,0
18
16
14
12
10
8
6
4
2
0
SCB/1000TC
2
3
4
5
6
7
log M (g/mol)

FIGURE 3

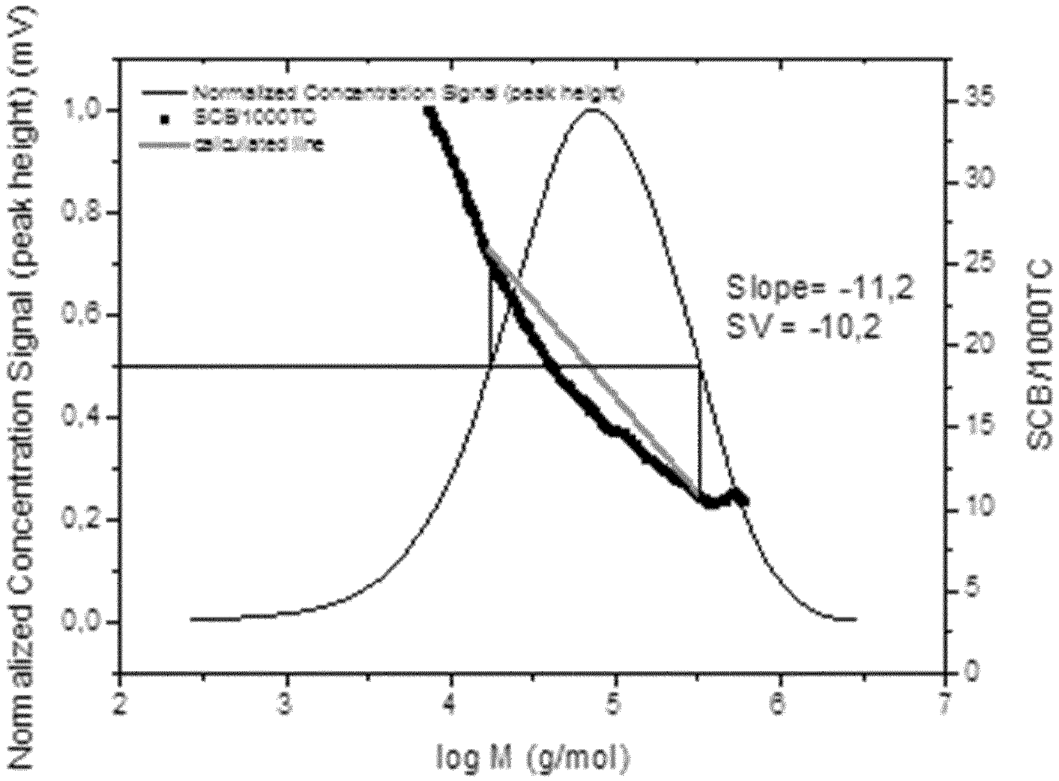
Normalized Concentration Signal (peak height)
SCB/1000TC
calculated line
Slope= -11,2
SV = -10,2
Normalized Concentration Signal (peak height) (mV)
SCB/1000TC
log M (g/mol)
1,0
0,8
0,6
0,4
0,2
0,0
2
3
4
5
6
7
35
30
25
20
15
10
5
0

Europäisches Patentamt
European Patent Office
Office européen des brevets

# EUROPEAN SEARCH REPORT

Application Number
EP 15 15 4077

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EP 2 746 306 A1 (BOREALIS AG [AT]) 25 June 2014 (2014-06-25) * the whole document * ----- | 1-13 | INV. C08F210/16 C08F4/651 |
| X | EP 2 746 300 A1 (BOREALIS AG [AT]) 25 June 2014 (2014-06-25) * the whole document * ----- | 1-13 | |

TECHNICAL FIELDS SEARCHED (IPC)
C08F

The present search report has been drawn up for all claims

1

| Place of search | Date of completion of the search | Examiner |
|---|---|---|
| Munich | 9 July 2015 | Balmer, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 15 15 4077

This annex lists the patent family members relating to the patent documents cited in the above-mentioned European search report. The members are as contained in the European Patent Office EDP file on
The European Patent Office is in no way liable for these particulars which are merely given for the purpose of information.

09-07-2015

| Patent document cited in search report | Publication date | Patent family member(s) | Publication date |
|---|---|---|---|
| EP 2746306 A1 | 25-06-2014 | EP 2746306 A1<br>WO 2014096296 A1 | 25-06-2014<br>26-06-2014 |
| EP 2746300 A1 | 25-06-2014 | EP 2746300 A1<br>WO 2014096297 A1 | 25-06-2014<br>26-06-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2008153586 A
- US 20140058053 A
- WO 2013142793 A
- US 7582712 B
- EP 2746306 A
- US 4582816 A
- US 3405109 A
- US 3324093 A
- EP 479186 A
- US 5391654 A
- US 4933149 A
- WO A A
- WO 2005087361 A
- US 4578879 A
- WO 2007025640 A
- US 4543399 A
- EP 699213 A
- WO 9425495 A
- EP 696293 A
- WO 0029452 A
- US 4621952 A
- EP 188125 A
- EP 250169 A
- EP 579426 A


### Non-patent literature cited in the description


- **A. ORTIN ; B. MONRABAL ; J. MONTESINOS ; P. DEL HIERRO.** *Macromol. Symp.,* 2009, vol. 282, 65-70
- **K. KLIMKE ; M. PARKINSON ; C. PIEL ; W. KAMINSKY ; H. W. SPIESS ; M. WILHELM.** *Macromol. Chem. and Phys.,* 2006, vol. 207, 382
- **M. PARKINSON ; K. KLIMKE ; H. W. SPIESS ; M. WILHELM.** *Macromol. Chem. and Phys.,* 2007, vol. 208, 2128
- **B. MONRABAL.** Crystallization analysis fractionation: A new technique for the analysis of branching distribution in polyolefins. *Journal of Applied Polymer Science,* 1994, vol. 52 (4), 491-499
- Fractionation. **SOARES, J.B.P.** Encyclopedia Of Polymer Science and Technology. John Wiley & Sons, 2001, vol. 10, 75-131